# EUROPEAN PATENT APPLICATION

(11) **EP 4 546 758 A1**
(43) Date of publication of application: **30.04.2025**
(21) Application number: 23852816.0
(22) Date of filing: 27.07.2023
(51) Int. Cl.: H04L 67/51, H04L 67/14, G06N 3/098, H04L 9/40, H04L 47/24, H04W 88/14

(54) **METHOD AND DEVICE FOR SUPPORTING FEDERATED LEARNING SERVICE IN WIRELESS COMMUNICATION SYSTEM**

(30) Priority: 09.08.2022 KR 20220099569
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); KIM, Hyesung, Suwon-si Gyeonggi-do 16677 (KR); PARK, Jungshin, Suwon-si Gyeonggi-do 16677 (KR)
(74) Representative: Nederlandsch Octrooibureau
(86) International application number: PCT/KR2023/010905
(87) International publication number: WO 2024/034935

(57) **Abstract**

The present disclosure relates to a 5G or 6G communication system for supporting higher data transfer rates. The present disclosure provides a method performed by a network exposure function (NEF) entity, the method comprising the steps of: receiving, from an application function (AF) entity, a session control request message including a terminal list including an identifier of at least one terminal performing federated learning; authenticating the request message; if the authentication is successful, transmitting a request message, for discovery of a PCF entity, including the list of the at least one terminal to a binding support function (BSF) entity; receiving a response message including a PCF address list from the BSF; on the basis of the PCF address list, transmitting a quality-of-service (QoS) flow control request message to the at least one PCF entity; receiving a response message for the QoS flow control request message; and transmitting a response message corresponding to the session control request message to the AF on the basis of the response message for the QoS flow control request message.

## Description

### [Technical Field]

The disclosure relates to a method and an apparatus for supporting a federated learning service in a wireless communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm Wave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to provide methods for efficient integrated access and backhaul node control.

### [Disclosure of Invention]

### [Technical Problem]

Embodiments set forth herein are to provide a device and a method capable of effectively providing services in a wireless communication system.

### [Solution to Problem]

According to an embodiment of the disclosure, a method performed by a network exposure function (NEF) entity may include: receiving a session control request message including a terminal list including an identifier of at least one terminal performing federated learning from an application function (AF) entity; performing authentication of the request message; in case that the authentication is successful, transmitting a request message for discovery of a PCF entity to a binding support function (BSF) entity, the request message including the list of the at least one terminal; receiving a response message including a PCF address list from the BSF; transmitting a quality of service (QoS) flow control request message to the at least one PCF entity, based on the PCF address list; receiving a response message to the QoS flow control request message; and transmitting a response message corresponding to the session control request message to the AF, based on the response message to the QoS flow control request message.

The session control request message may include a request message for generation, deletion, and update of a session, and the QoS flow control request message may include a message for generation, update, and deletion of a QoS flow.

The session control request message may include an identifier of the AF entity and at least one of an identifier of a federated learning group including the at least one terminal, QoS information about the at least one terminal, and federated learning information.

The QoS flow control request message may include at least one of the identifier of the at least one terminal, the terminal list, and QoS information.

The transmitting of the QoS flow control request message to the at least one PCF entity may include, in case that the PCF entity in the PCF address list is associated with a plurality of terminals, transmitting the QoS flow control request message to all of the plurality of terminals through a PCF entity.

The PCF address list may include an address of at least one policy control function (PCF) entity associated with at least one terminal included in the list.

Information about a PCF entity selected by an access and mobility management function (AMF) entity through a registration request message of the terminal and information included in the registration request message of the terminal may be stored in the BSF entity.

The method may further include: receiving an update request message for group information about the at least one terminal from the AF entity; transmitting an update request message for the group information about the at least one terminal to the BSF, based on the update request message; and receiving a response message from the BSF entity.

A network exposure function (NEF) entity in a wireless communication system may include: a transceiver; and at least one processor coupled with the transceiver, wherein the at least one processor may be configured to: receive a session control request message including a terminal list including an identifier of at least one terminal performing federated learning from an application function (AF) entity; perform authentication of the request message; in case that the authentication is successful, transmit a request message for discovery of a PCF entity to a binding support function (BSF) entity, the request message including the list of the at least one terminal; receive a response message including a PCF address list from the BSF; transmit a quality of service (QoS) flow control request message to the at least one PCF entity, based on the PCF address list; receive a response message to the QoS flow control request message; and transmit a response message corresponding to the session control request message to the AF, based on the response message to the QoS flow control request message.

The session control request message may include a request message for generation, deletion, and update of a session, and the QoS flow control request message may include a message for generation, update, and deletion of a QoS flow.

The session control request message may include an identifier of the AF entity and at least one of an identifier of a federated learning group including the at least one terminal, QoS information about the at least one terminal, and federated learning information.

The QoS flow control request message may include at least one of the identifier of the at least one terminal, the terminal list, and QoS information.

The at least processor is configured to, in case that the PCF entity in the PCF address list is associated with a plurality of terminals, transmit the QoS flow control request message to all of the plurality of terminals through a PCF entity.

The PCF address list may include an address of at least one policy control function (PCF) entity associated with at least one terminal included in the list.

Information about a PCF entity selected by an access and mobility management function (AMF) entity through a registration request message of the terminal and information included in the registration request message of the terminal may be stored in the BSF entity.

### [Advantageous Effects of Invention]

Embodiments set forth herein provide a device and a method capable of effectively providing services in a wireless communication system.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates an example of policy control function (PCF) discovery for a plurality of UEs in a wireless communication system according to an embodiment of the disclosure;
FIG. 2 illustrates a procedure of generating and updating a group ID for each UE in a BSF when an AF provides a group ID for a plurality of UEs in a wireless communication system according to an embodiment of the disclosure;
FIG. 3 illustrates a procedure of generating and updating a group ID for a UE in a BSF when the UE provides the group ID for the UE in a UE registration procedure in a wireless communication system according to an embodiment of the disclosure;
FIG. 4 is a block diagram illustrating a structure of a UE according to an embodiment of the disclosure.
FIG. 5 is a block diagram illustrating a structure of a network entity according to an embodiment of the disclosure.

### [Mode for the Invention]

The disclosure proposes a method for supporting a federated learning (FL) service in a mobile communication system. In a 5G system, a third-party application server (AS) that provides an FL service may request QoS processing for a plurality of UEs (e.g., an FL group) through an application function (AF). Here, a 5GC needs to perform a policy control function (PCF) discovery procedure for discovering an identifier or address information of a PCF(s) (entity that determines a QoS parameter for a UE) related to (i.e., associated with) each UE (i.e., associated) for the plurality of UEs.

When receiving a request from a third-party FL service provider, the 5G system needs to be able to quickly perform QoS processing (e.g., QoS flow generation, a QoS parameter update for a QoS flow, and QoS flow release) for UEs participating in FL and then notify of a result. In the conventional PCF discovery technology, a binding support function (BSF) stores a UE identity (UE ID or UE identifier), single-network slice selection assistance information (S-NSSAI, a slice identifier), a data network name (DNN), and PCF information (PCF address, a PCF ID, and a PCF instance ID), and when a consumer NF requesting PCF discovery provides a UE ID via a request message transmitted to the BSF, the BSF provides PCF information about a UE corresponding to the UE ID via a response message. That is, in the conventional method, for PCF discovery for N UEs, N request messages and N response messages may be required between the PCF discovery consumer NF and the BSF.

The disclosure proposes a method for quickly obtaining PCF information for a plurality of UEs. Specifically, the disclosure proposes a method in which a binding support function (BSF) provides PCF information about each UE when receiving a plurality of pieces of UE identifier information. In addition, the disclosure proposes a method in which a BSF provides PCF information about each UE for UEs corresponding to a group ID when receiving the group ID.

A 5G mobile communication network includes a 5G user equipment (UE or terminal), a 5G radio access network (RAN, a base station, 5G nodeB (gNB), evolved nodeB (eNB), etc.), and a 5G core network. The 5G core network may include network functions (NFs), such as an access and mobility management function (AMF) which provides a mobility management function of a UE, a session management function (SMF) which provides a session management function, a user plane function (UPF) which serves to transfer data, a policy control function (PCF) which provides a policy control function, a unified data management (UDM) which provides a function to manage data, such as subscriber data and policy control data, and a unified data repository (UDR) which stores data of various network functions (NFs) such as the UDM.

In 3GPP systems, conceptual links connecting NFs in the 5G system are defined as reference points. Reference points included in the 5G system architecture are enumerated as follows.
- N1: a reference point between a UE and an AMF
- N2: a reference point between an (R)AN and an AMF
- N3: a reference point between an (R)AN and a UPF
- N4: a reference point between an SMF and a UPF
- N5: a reference point between a PCF and an AF
- N6: a reference point between a UPF and a DN
- N7: a reference point between an SMF and a PCF
- N8: a reference point between a UDM and an AMF
- N9: a reference point between two core UPFs
- N10: a reference point between a UDM and an SMF
- N11: a reference point between an AMF and an SMF
- N12: a reference point between an AMF and an authentication server function (AUSF)
- N13: a reference point between a UDM and an AUSF
- N14: a reference point between two AMFs
- N15: a reference point between a PCF and an AMF for a non-roaming scenario, and a reference point between a PCF and an AMF in a visited network for a roaming scenario

In the 5G system, network slicing refers to a structure and a technology enabling multiple independent logical networks virtualized in a single physical network. In order to satisfy specialized requirements of a service/application, a network operator provides a service by configuring a virtual end-to-end network referred to as a network slice. In this case, the network slice is distinguished by an identifier referred to as single-network slice selection assistance information (S-NSSAI). The network transmits a set of allowed slices (e.g., allowed NSSAI(s)) to a UE during a UE registration procedure, and the UE transmits and receives application data via a protocol data unit (PDU) session generated via one piece of S-NSSAI (i.e., network slice) in the set of allowed slices.

In the disclosure, the UE ID may be in the form of a subscription permanent identifier (SUPI), a subscription concealed identifier (SUCI), a generic public subscription identifier (GPSI), a permanent equipment identifier (PEI), or a UE address (IP address, MAC address, or fully qualified domain name (FQDN)). In the disclosure, the group ID may be in the form of an external group ID or an internal group ID.

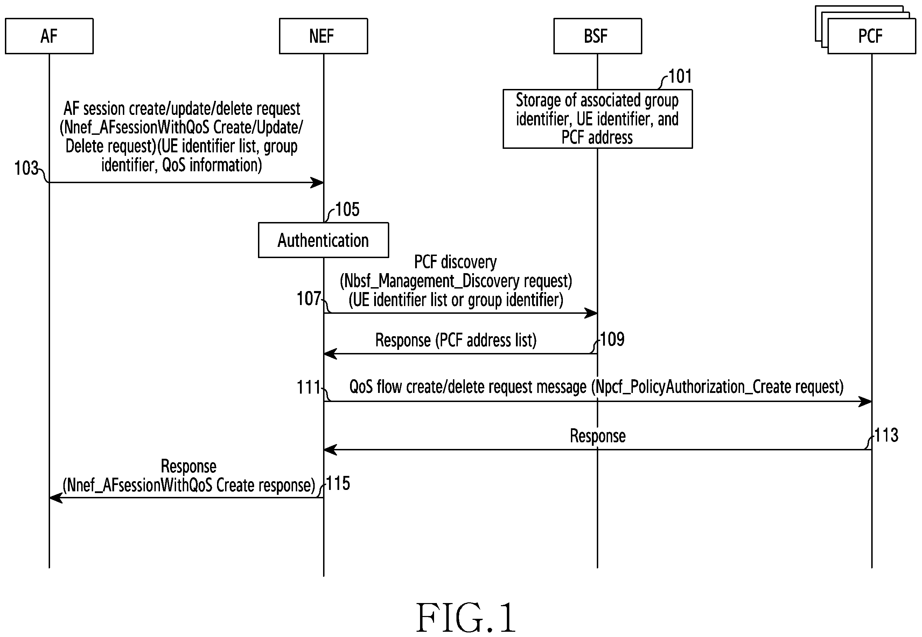

FIG. 1 illustrates an example of PCF discovery for a plurality of UEs.

In operation 101, a BSF may store a group ID (e.g., an FL group ID) and PCF address information relating to a UE ID or PCF address information about the UE ID. The BSF may obtain and store the corresponding information (i.e., the group ID and a PCF address) relating to the UE ID in a PCF selection procedure for a UE. Alternatively, the BSF may obtain and store group ID information about the UE ID from a network exposure function (NEF) or a unified data management (UDM) in an external parameter provisioning procedure. Alternatively, the BSF may obtain and store the group ID information about the UE ID from the NEF in an AF session generation procedure.

In operation 103, an AF may transmit a request message for generation, update, or deletion of an AF session to the NEF. The message transmitted by the AF may include the following information.

List of UE IDs: Indicates a list of UE IDs. When the AF performs a request for a federated learning (FL) service, identifier information about UEs participating in FL may be included. The UE identifier information may be in the form of a generic public subscription identifier (GSPI).

Group ID: Indicates identifier information about a group that includes the list of UE IDs included in the message provided by the AF. The group ID may be an identifier of an FL group (i.e., an FL group ID) that represents the UEs participating in the FL.

AF ID: Indicates identifier information about the AF.

QoS information per UE: When the message transmitted by the AF is a request message for generation or update of the AF session, requested QoS information (i.e., a QoS parameter, a QoS reference, and an alternative service requirement) may be included. When the AF wishes to request a different QoS for each UE, the QoS information may include different QoS information for each UE. When the AF wishes to request a common QoS for the UEs, the QoS information may include QoS information commonly applicable to the UEs included in the list of UE IDs.

In operation 105, the NEF allocates a transaction reference ID for the request message received in operation 103. The NEF performs authentication of the request message received in operation 103.

When the authentication is successful in operation 105, the NEF performs a PCF discovery procedure of discovering a corresponding PCF for the UEs included in the list of UE IDs received in operation 103 in operation 107. The NEF may include the following information in a request message transmitted to the BSF:
List of UE IDs; and
Group ID.

In operation 109, when the message received in operation 107 includes the list of UE IDs, the BSF identifies a PCF address for each UE ID included in the list, and includes a list of serving PCF addresses per UE (i.e., a list including a PCF address(es) per UE) in a response message transmitted to the NEF.

When the message received in operation 107 includes the group ID, the BSF identifies UE IDs corresponding to the group ID, identifies a PCF address for each UE ID, and includes a list of serving PCF addresses per UE (i.e., a list including PCF address(es) per UE) in a response message transmitted to the NEF.

In operation 111, the NEF discovers addresses of PCFs for all UEs corresponding to the list of UE IDs or the group IDs received in operation 103, based on the PCF address for each UE obtained in operation 109. The NEF may transmit a request message for generation/update/deletion of a QoS flow for a UE to each PCF of the PCFs for all UEs corresponding to the list of UE IDs or the group IDs received in operation 103. The request message transmitted to each PCF may include the following information.

UE ID: Indicates UE identifier information.

List of UE IDs: Indicates a list of UE identifier information. When the corresponding PCF is responsible for a plurality of UEs among the UEs included in the list of UE IDs, the NEF may include identifier information (a list of UE IDs) about the UEs for which the PCF is responsible.

QoS information: When the request message is a request for generation/update of the QoS flow, the QoS information about each UE or the list of UE IDs received in operation 103 may be included in the message transmitted to each PCF. The information may include a QoS parameter, a requested alternative QoS parameter, an alternative service requirement, and the like.

When the message received in operation 111 includes identifier information about two or more UEs (i.e., a list of UE IDs is included), the PCF may equally apply the QoS information in the message received in operation 111 to the UEs included in the list of UE IDs in operation 113. The PCF transmits a response message to operation 111 to the NEF.

In operation 115, the NEF transmits a response message to the request message of operation 103 to the AF.

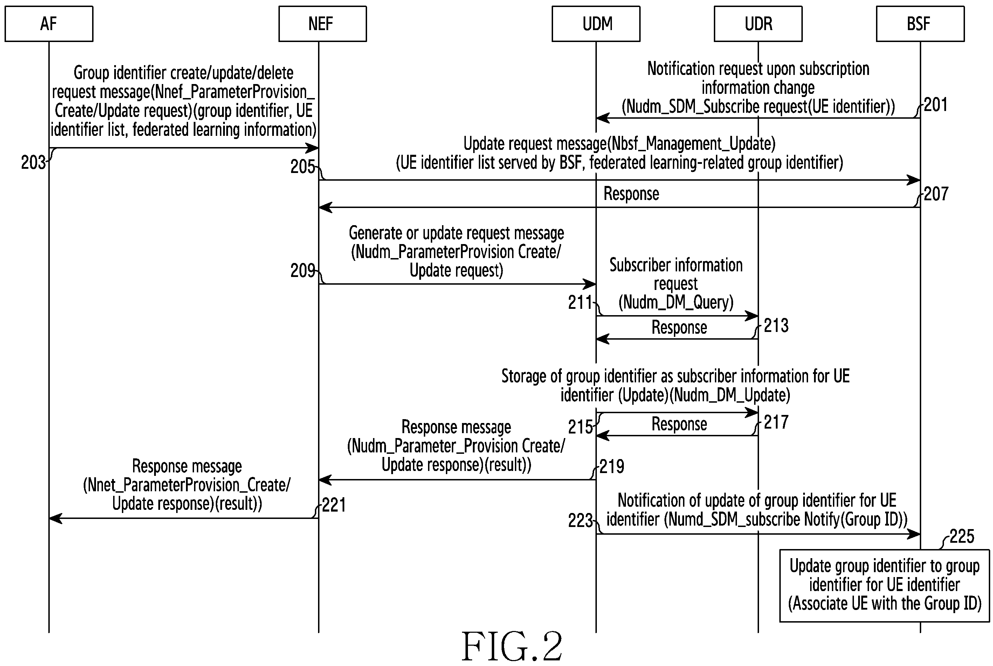

FIG. 2 illustrates a procedure of generating and updating a group ID for each UE in a BSF when an AF provides a group ID for a plurality of UEs.

In operation 201, the binding support function (BSF) transmits a request message for a notification to a unified data management (UDM) per UE ID with respect to UE IDs being stored when subscription information including a group ID relating to a UE ID is changed.

In operation 203, the AF may transmit a request message (e.g., a Nnef_ParameterProvision_Create/Update/Delete request message) for generation/update/deletion of a group ID associated with a list of UE IDs to a 5GC. The AF may transmit the Nnef_ParameterProvision_Create/Update/Delete request message to the 5GC to generate/update/delete the group ID associated with the list of UE IDs and FL information (e.g., information about an FL learning model). The message may include the following information.

List of UE IDs: Indicates a list of UE IDs. When the AF performs a request for a federated learning (FL) service, identifier information about UEs participating in FL may be included. The UE identifier information may be in the form of a generic public subscription identifier (GSPI).

Group ID: Indicates identifier information about a group that includes the list of UE IDs included in the message provided by the AF. The group ID may be an identifier of an FL group (i.e., an FL group ID) that represents the UEs participating in the FL.

AF ID: Indicates identifier information about the AF.

FL information: May be included when the AF performs the request for the federated learning (FL) service. Information about an FL learning model may be included, and the size of the FL learning model, a learning traffic requirement (bandwidth and latency), and an inference traffic requirement (bandwidth and latency) may be included.

In operation 205, when the message received in operation 203 includes the group ID and when the message received in operation 203 is a generation or update request message, the NEF may transmit an update request message to the BSF responsible for each UE ID included in the message received in operation 203. The NEF may include the UE ID and the group ID for which the BSF is responsible in the update message transmitted to the BSF.

When there is a BSF responsible for two or more UE IDs in the list of UE IDs included in the message received in operation 203, the NEF may include information about UEs for which the BSF is responsible (a list of UE IDs served by the BSF) in the list of UE IDs included in the message received in operation 203 in the message transmitted to the BSF.

Although not shown in the drawing, when the message from the NEF is a deletion request message, the BSF may transmit a deletion request message to the BSF. The NEF may include a UE ID or a list of UE IDs for which the BSF is responsible in the deletion request message transmitted to the BSF.

When receiving the update request message from the NEF, the BSF stores group ID information included in the message for the UE ID or the list of UE IDs included in the message.

When receiving the deletion request message from the NEF, the BSF deletes group ID information previously stored for the UE ID or the list of UE IDs included in the message.

In operation 207, the BSF may transmit a response message including a request result to the NEF.

In operation 209, the NEF performs authentication of the AF. When the authentication is successful, if the message received in operation 203 is the generation or update request message, the NEF transmits a generation or update request message to the UDM for each UE included in the list of UE IDs included in the message received in operation 203, and may include the UE ID and the group ID and the FL information included in the message received in operation 203 in the message transmitted to the UDM.

In operation 211, the UDM requests subscriber information about the UE from a UDR to verify whether it is possible to store or update the information provided (i.e., the group ID and the FL information) by the AF for the UE in the message received from the NEF in operation 209 as subscriber information.

In operation 213, the UDR transmits a response message to the request message in operation 211 to the UDM.

In operation 215, the UDM performs authentication of the AF included in the message received in operation 209, based on the information received in operation 211. When the AF is authenticated as being able to provide information (or a parameter) about the UE IDs included in the message received in operation 209 (i.e., the authentication is successful), the UDM stores the group ID as subscriber information for the UE ID, based on the information included in the message received from the NEF in operation 209.

In operation 217, the UDR transmits a response message to the message transmitted in operation 215 to the UDM.

In operation 219, the UDM transmits a response message to the request in operation 209 to the NEF.

In operation 221, the NEF transmits a response message to the request message in operation 203.

When storing or updating the group ID included in the message received in operation 209 as the subscriber information for the UE ID included in the message received in operation 209 in operation 215, the UDM notifies the BSF, which has received the subscription request for the UE ID in operation 201, that the group ID information for the UE ID has been updated in operation 223. The message transmitted by the UDM to the BSF may include the UE ID and the group ID.

When the message received in operation 223 includes the UE ID and the group ID and a group ID is already stored for the UE ID, the BSF updates the group ID included in the message received in operation 223 to the group ID for the UE ID in operation 225. When the message received in operation 223 includes the UE ID and the group ID but no group ID is stored for the UE ID, the BSF stores the group ID included in the message received in operation 223 as a group ID for the UE ID.

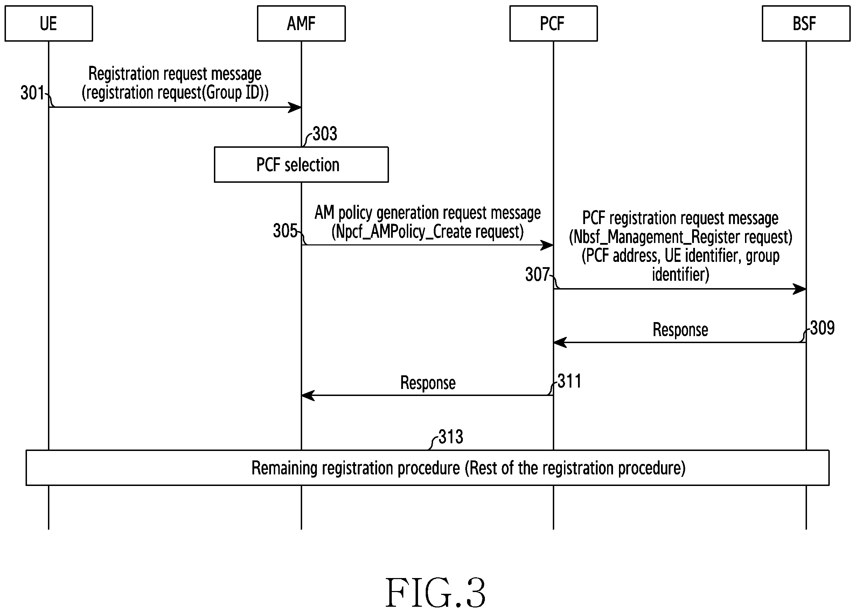

FIG. 3 illustrates a procedure of generating and updating a group ID for a UE in a BSF when the UE provides the group ID for the UE in a UE registration procedure.

In operation 301, the UE may include a UE ID (UE identifier information) and group ID information associated with the UE in a registration request message transmitted to an AMF through an RAN in a registration procedure.

When the message received in operation 301 is a registration request, the AMF performs an AM policy association procedure for the UE ID in operation 303. The AMF may select a PCF from which an AM policy for the UE is provided, based on the UE ID received in operation 301.

In operation 305, the AMF transmits an AM policy generation request message for the UE to the PCF selected in operation 303. The message may include the UE ID and the group ID received in operation 301.

When receiving the AM policy generation request message from the AMF in operation 305, the PCF transmits a PCF registration request message to the BSF in operation 307. The PCF may include the following information in the message.

PCF address: Indicates a PCF identifier or a PCF address.

UE ID: Indicates UE identifier information.

Group ID: Indicates group identifier information associated with the UE identifier information. The information is included when a group ID is included in the message received by the PCF in operation 305.

When the message received in operation 307 includes the UE ID, the group ID, and the PCF address, the BSF may store a PCF address for the UE ID and the group ID as the PCF address included in the message received in operation 307 in operation 309.

The BSF may transmit a response message to the message transmitted in operation 307 to the PCF.

In operation 311, the PCF may transmit a response message to operation 305 to the AMF.

In operation 313, the remaining registration procedures may be performed.

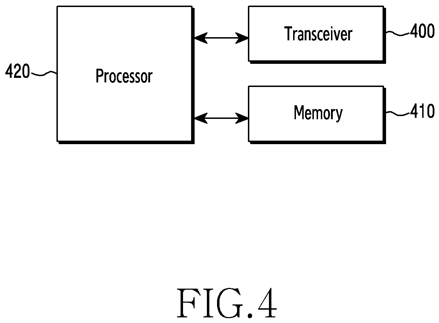

FIG. 4 is a block diagram illustrating a structure of a UE according to an embodiment of the disclosure.

As illustrated in FIG. 4, a UE of the disclosure may include a processor 420, a transceiver 400, and a memory 410. However, components of the UE are not limited to the above-described example. For example, the UE may include a larger or smaller number of components than the above-described components. In addition, the processor 420, the transceiver 400, and the memory 410 may be implemented in the form of a single chip.

According to an embodiment of the disclosure, the processor 420 may control a series of processes so that the UE can operate according to the above-described embodiments of the disclosure. For example, the processor 420 may control the components of the UE in order to perform the methods for supporting priority of a network slice according to the above-described embodiments. The processor 420 may control the components of the UE to perform the embodiments of the disclosure by executing the programs stored in the memory 410. In addition, the processor 420 may be an application processor (AP), a communication processor (CP), a circuit, an application-specific circuit, or at least one processor.

According to an embodiment of the disclosure, the transceiver 400 may transmit/receive signals with network entities. The signals transmitted/received with network entities may include control information and data. The transceiver 400 may include an RF transmitter configured to up-convert and amplify the frequency of transmitted signals, an RF receiver configured to low-noise-amplify received signals and down-convert the frequency thereof, and the like. However, this is only an embodiment of the transceiver 400, and the components of the transceiver 400 are not limited to the RF transmitter and the RF receiver. In addition, the transceiver 400 may receive signals through a radio channel, output the same to the processor 420, and transmit signals output from the processor 420 through the radio channel.

According to an embodiment of the disclosure, the memory 410 may store programs and data necessary for operations of the UE. In addition, the memory 410 may store control information or data included in signals transmitted/received by the UE. The memory 410 may include storage media such as a ROM, a RAM, a hard disk, a CD-ROM, and a DVD, or a combination of storage media. In addition, the memory 410 may include multiple memories. Furthermore, according to an embodiment, the memory 410 may store programs for performing the methods for supporting priority of a network slice according to the above-described embodiments.

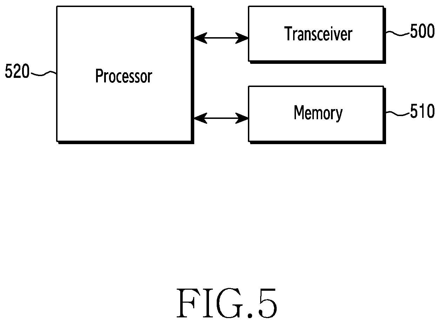

FIG. 5 is a block diagram illustrating a structure of a network entity according to an embodiment of the disclosure.

As illustrated in FIG. 5, a network entity of the disclosure may include a processor 520, a transceiver 500, and a memory 510. However, components of the network entity are not limited to the above-described example. For example, the network entity may include a larger or smaller number of components than the above-described components. In addition, the processor 520, the transceiver 500, and the memory 510 may be implemented in the form of a single chip.

According to an embodiment of the disclosure, the processor 520 may control a series of processes so that the NF can operate according to the above-described embodiments of the disclosure. For example, the processor 520 may control the components of the network entity in order to perform the methods for supporting priority of a network slice according to the above-described embodiments. The processor 520 may control the components of the network entity to perform the embodiments of the disclosure by executing programs stored in the memory 510. In addition, the processor 520 may include at least one processor.

According to an embodiment of the disclosure, the transceiver 500 may transmit/receive signals with other network entities or UEs. The signals transmitted/received with other network entities or UEs may include control information and data. The transceiver 500 may include an RF transmitter configured to up-convert and amplify the frequency of transmitted signals, an RF receiver configured to low-noise-amplify received signals and down-convert the frequency thereof, and the like. However, this is only an embodiment of the transceiver 500, and the components of the transceiver 500 are not limited to the RF transmitter and the RF receiver. In addition, the transceiver 500 may receive signals through a radio channel, output the same to the processor 520, and transmit signals output from the processor 520 through the radio channel.

According to an embodiment of the disclosure, the memory 510 may store programs and data necessary for operations of the network entity. In addition, the memory 510 may store control information or data included in signals transmitted/received by the network entity. The memory 510 may include storage media such as a ROM, a RAM, a hard disk, a CD-ROM, and a DVD, or a combination of storage media. In addition, the memory 510 may include multiple memories. Furthermore, according to an embodiment, the memory 510 may store programs for performing the methods for supporting priority of a network slice according to the above-described embodiments.

According to an embodiment of the disclosure, a method performed by a UE may include: transmitting a registration request message to a base station, the registration request message including network slice access stratum (AS) group (NSAG) support information and being transmitted to an access and mobility management function (AMF) through the base station; and receiving a registration accept message including NSAG information related to a priority of each network slice from the base station through the AMF, the NSAG information being determined based on the NSAG support message.

According to an embodiment of the disclosure, a method performed by a network exposure function (NEF) entity may include: receiving a session control request message including a UE list including an identifier of at least one UE performing federated learning from an application function (AF) entity; performing authentication of the request message; transmitting a request message for discovery of a PCF entity including the list of the at least one UE to a binding support function (BSF) entity when the authentication is successful; receiving a response message including a PCF address list from the BSF; transmitting a quality of service (QoS) flow control request message to the at least one PCF entity, based on the PCF address list; receiving a response message to the QoS flow control request message; and transmitting a response message corresponding to the session control request message to the AF, based on the response message to the QoS flow control request message.

The session control request message may include a request message for generation, deletion, and update of a session, and the QoS flow control request message may include a message for generation, update, and deletion of a QoS flow.

The session control request message may include an identifier of the AF entity and at least one of an identifier of a federated learning group including the at least one UE, QoS information about the at least one UE, and federated learning information.

The QoS flow control request message may include at least one of the identifier of the at least one UE, the UE list, and QoS information.

The transmitting of the QoS flow control request message to the at least one PCF entity may include transmitting the QoS flow control request message to all of a plurality of UEs through a PCF entity when the PCF entity in the PCF address list is associated with the plurality of UEs.

The PCF address list may include an address of at least one policy control function (PCF) entity associated with at least one UE included in the list.

Information about a PCF entity selected by an access and mobility management function (AMF) entity through a registration request message of the UE and information included in the registration request message of the UE may be stored in the BSF entity.

The method may further include: receiving an update request message for group information about the at least one UE from the AF entity; transmitting an update request message for the group information about the at least one UE to the BSF, based on the update request message; and receiving a response message from the BSF entity.

A network exposure function (NEF) entity in a wireless communication system may include: a transceiver; and at least one processor coupled with the transceiver, wherein the at least one processor may be configured to: receive a session control request message including a UE list including an identifier of at least one UE performing federated learning from an application function (AF) entity; perform authentication of the request message; transmit a request message for discovery of a PCF entity including the list of the at least one UE to a binding support function (BSF) entity when the authentication is successful; receive a response message including a PCF address list from the BSF; transmit a quality of service (QoS) flow control request message to the at least one PCF entity, based on the PCF address list; receive a response message to the QoS flow control request message; and transmit a response message corresponding to the session control request message to the AF, based on the response message to the QoS flow control request message.

The session control request message may include a request message for generation, deletion, and update of a session, and the QoS flow control request message may include a message for generation, update, and deletion of a QoS flow.

The session control request message may include an identifier of the AF entity and at least one of an identifier of a federated learning group including the at least one UE, QoS information about the at least one UE, and federated learning information.

The QoS flow control request message may include at least one of the identifier of the at least one UE, the UE list, and QoS information.

The at least processor is configured to transmit the QoS flow control request message to all of a plurality of UEs through a PCF entity when the PCF entity in the PCF address list is associated with the plurality of UEs.

The PCF address list may include an address of at least one policy control function (PCF) entity associated with at least one UE included in the list.

Information about a PCF entity selected by an access and mobility management function (AMF) entity through a registration request message of the UE and information included in the registration request message of the UE may be stored in the BSF entity.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented.

## Claims

1. A method performed by a network exposure function (NEF) entity, the method comprising:
receiving a session control request message comprising a terminal list comprising an identifier of at least one terminal performing federated learning from an application function (AF) entity;
performing authentication of the request message;
in case that the authentication is successful, transmitting a request message for discovery of a PCF entity to a binding support function (BSF) entity, the request message comprising the list of the at least one terminal;
receiving a response message comprising a PCF address list from the BSF;
transmitting a quality of service (QoS) flow control request message to the at least one PCF entity, based on the PCF address list;
receiving a response message to the QoS flow control request message; and
transmitting a response message corresponding to the session control request message to the AF, based on the response message to the QoS flow control request message.

2. The method of claim 1, wherein the session control request message comprises a request message for generation, deletion, and update of a session, and the QoS flow control request message comprises a message for generation, update, and deletion of a QoS flow.

3. The method of claim 1, wherein the session control request message comprises an identifier of the AF entity and at least one of an identifier of a federated learning group comprising the at least one terminal, QoS information about the at least one terminal, and federated learning information.

4. The method of claim 1, wherein the QoS flow control request message comprises at least one of the identifier of the at least one terminal, the terminal list, and QoS information.

5. The method of claim 1, wherein the transmitting of the QoS flow control request message to the at least one PCF entity comprises, in case that the PCF entity in the PCF address list is associated with a plurality of terminals, transmitting the QoS flow control request message to all of the plurality of terminals through a PCF entity.

6. The method of claim 1, wherein the PCF address list comprises an address of at least one policy control function (PCF) entity associated with at least one terminal included in the list.

7. The method of claim 1, wherein information about a PCF entity selected by an access and mobility management function (AMF) entity through a registration request message of the terminal and information included in the registration request message of the terminal are stored in the BSF entity.

8. The method of claim 1, further comprising:
receiving an update request message for group information about the at least one terminal from the AF entity;
transmitting an update request message for the group information about the at least one terminal to the BSF, based on the update request message; and
receiving a response message from the BSF entity.

9. A network exposure function (NEF) entity in a wireless communication system, the NEF entity comprising:
a transceiver; and
at least one processor coupled with the transceiver,
wherein the at least one processor is configured to:
receive a session control request message comprising a terminal list comprising an identifier of at least one terminal performing federated learning from an application function (AF) entity;
perform authentication of the request message;
in case that the authentication is successful, transmit a request message for discovery of a PCF entity to a binding support function (BSF) entity, the request message comprising the list of the at least one terminal;
receive a response message comprising a PCF address list from the BSF;
transmit a quality of service (QoS) flow control request message to the at least one PCF entity, based on the PCF address list;
receive a response message to the QoS flow control request message; and
transmit a response message corresponding to the session control request message to the AF, based on the response message to the QoS flow control request message.

10. The NEF entity of claim 9, wherein the session control request message comprises a request message for generation, deletion, and update of a session, and the QoS flow control request message comprises a message for generation, update, and deletion of a QoS flow.

11. The NEF entity of claim 9, wherein the session control request message comprises an identifier of the AF entity and at least one of an identifier of a federated learning group comprising the at least one terminal, QoS information about the at least one terminal, and federated learning information.

12. The NEF entity of claim 9, wherein the QoS flow control request message comprises at least one of the identifier of the at least one terminal, the terminal list, and QoS information.

13. The NEF entity of claim 9, wherein the at least processor is configured to, in case that the PCF entity in the PCF address list is associated with a plurality of terminals, transmit the QoS flow control request message to all of the plurality of terminals through a PCF entity.

14. The NEF entity of claim 9, wherein the PCF address list comprises an address of at least one policy control function (PCF) entity associated with at least one terminal included in the list.

15. The NEF entity of claim 9, wherein information about a PCF entity selected by an access and mobility management function (AMF) entity through a registration request message of the terminal and information included in the registration request message of the terminal are stored in the BSF entity.
